# EUROPÄISCHE PATENTSCHRIFT

(11) **EP 1 565 680 B1**
(45) Veröffentlichungstag und Bekanntmachung des Hinweises auf die Patenterteilung: **12.04.2006**
(21) Anmeldenummer: 03779685.1
(22) Anmeldetag: 12.11.2003
(51) Int. Cl.: F16K 31/06

(54) **DIREKTGESTEUERTES PROPORTIONAL DRUCKBEGRENZUNGSVENTIL**
DIRECTLY CONTROLLED PROPORTIONAL PRESSURE CONTROL VALVE
SOUPAPE DE LIMITATION DE PRESSION A REGULATION PROPORTIONNELLE DIRECTE

(30) Priorität: 28.11.2002 DE 10255740
(43) Veröffentlichungstag der Anmeldung: 24.08.2005
(73) Patentinhaber: Bosch Rexroth AG, 70184 Stuttgart (DE)
(72) Erfinder: SCHNEIDER, Konrad, 97778 Fellen (DE); MÜLLER, Thomas, 97854 Steinfeld (DE)
(74) Vertreter: Winter, Brandl, Fürniss, Hübner Röss, Kaiser, Polte Partnerschaft Patent- und Rechtsanwaltskanzlei
(86) Internationale Anmeldenummer: PCT/DE2003/003740
(87) Internationale Veröffentlichungsnummer: WO 2004/048831

(56) Entgegenhaltungen:
- DE-A- 19 625 349
- FR-A- 2 632 045
- US-A- 4 027 850
- US-A- 5 546 987
- US-A- 5 676 345

## Beschreibung

Die Erfindung betrifft ein direktgesteuertes und proportional verstellbares Druckbegrenzungsventil gemäß dem Oberbegriff des Patentanspruchs 1.

Derartige Druckbegrenzungsventile werden beispielsweise als proportional verstellbare Druckbegrenzungsventile eingesetzt. In der WO 00/50794 A1 ist ein direktgesteuertes Druckbegrenzungsventil offenbart, bei dem ein Anker eines Proportionalmagneten über einen Stößel auf einen Ventilkegel wirkt. Der Ventilkegel ist mit einer Gleitführung im Ventilgehäuse geführt und der am Ventilkegel anliegende Stößel ist im Anker abgestützt und durchsetzt eine Führungsscheibe des Ventilgehäuses. Problematisch bei dieser Lösung ist, dass es im Fall des Achsversatzes zwischen dem Ventilsitz und dem Ventilkegel möglich ist, dass das Druckbegrenzungsventil nicht mehr zuverlässig schließt.

In der DE 196 25 349 wird eine diesbezüglich verbesserte Lösung vorgeschlagen, bei der der Ventilkegel direkt im Anker abgestützt ist. Hierzu ist der Anker mit einer Durchgangsbohrung versehen, die rückseitig durch eine Scheibe verschlossen ist, an der der Ventilkegel über eine Kugel abgestützt ist. Der Ventilkegel ist mit einem gewissen Radialspiel im Anker geführt, so dass ein Achsversatz zwischen dem Anker und dem Ventilkegel durch leichte Schrägstellung des Ventilkegels ausgleichbar ist.

Eine ähnliche Lösung ist auch in der DE 32 44 840 C2 offenbart.

Es zeigte sich jedoch, dass auch diese Varianten mit einem mit Spiel im Anker gelagerten Ventilkörper mit hoher Präzision gefertigt und zusammengefügt werden müssen, um ein zuverlässiges Schließen zu gewährleisten und eine Schädigung des Ventilsitzes zu verhindern.

Demgegenüber liegt der Erfindung die Aufgabe zugrunde, ein direktgesteuertes prop. Druckbegrenzungsventil zu schaffen, bei dem mit geringem fertigungstechnischen und vorrichtungstechnischen Aufwand eine zuverlässige Funktion gewährleistet ist.

Diese Aufgabe wird durch ein direktgesteuertes prop. Druckbegrenzungsventil mit dem Merkmal des Patentanspruchs 1 gelöst.

Erfindungsgemäß ist der Ventilkegel des Druckbegrenzungsventil axial zentriert kardanisch am Anker abgestützt, wobei das Radialspiel zwischen dem Ventilkegel und dem Anker so groß ist, dass der Ventilkegel bei einer Bewegung relativ zum Anker nicht an diesem reibt und Druckmittel weitgehend frei zwischen Anker und Ventilkegel fliessen kann. Es ist zwischen dem Anker und dem Ventilsitz eine gehäusefeste Führung für den Ventilkegel vorhanden, die mit geringerem Radialspiel als das ankerseitige Radialspiel ausgebildet ist.

Unter dem Begriff "kardanisch" soll eine Abstützung des Ventilkegels verstanden werden, die dessen Schrägstellung mit Bezug zur Ankerachse ermöglicht.

Ein derartiges erfindungsgemäßes Druckbegrenzungsventil weist zum einen die Vorteile des eingangs beschriebenen Standes der Technik auf und ein Achsversatz zwischen Anker und Ventilsitz auf einfache Weise ausgeglichen ist. Andererseits wird durch die gehäusefeste Führung sichergestellt, dass der Ventilkegel mit Bezug zum Ventilsitz exakt genug geführt ist, um den Ventilsitz ohne Anstossen an den Ventilkegel und damit ohne Beschädigung montieren zu können. Ein weiterer Vorteil dieser Lösung besteht darin, dass durch die gehäusefeste Führung ein Drosselspalt für in den Ankerraum und aus dem Ankerraum fliessendes Druckmittel gebildet wird und dadurch die Bewegungen des Ventilkegels gedämpft werden. Durch die zentrierte kardanische Abstützung des Ventilkegels am Anker ist die radiale Lage des einen Endes des Ventilkegels festgelegt. Das andere Ende wird bei geschlossenem Ventil durch den Ventilsitz und bei offenem Ventil durch die Druckmittelströmung zentriert, so dass sichergestellt ist, dass der Ventilkegel nicht an der gehäusefesten Führung reibt.

Bei einer bevorzugten Variante der Erfindung erfolgt die Axialabstützung des Ventilkegels im Anker über eine Kugel, die somit eine Art allseitige gelenkige Abstützung ausbildet und somit ein Schrägstellen des Ventilkegels in gewissem Maße erlaubt.

Besonders bevorzugt wird es, wenn die Abstützung des Ventilkegels in Axialrichtung gesehen im Mittelbereich des Ankers erfolgt. Durch diese Maßnahme wird der Achsversatz des im Anker mit Bezug zum Ventilkegel bei einem Kippen des Ankers aufgrund seines Spiels im Polrohr minimiert.

Die Abstützung des Ventilkegels ist besonders einfach, wenn im Anker eine axial verlaufende Sacklochbohrung ausgeführt ist, die den Ventilkegel abschnittsweise aufnimmt. Dessen Rückseite ist dann am Boden der Sachlochbohrung mittelbar oder unmittelbar abgestützt.

Zur Verbesserung der Abstützung über eine Kugel kann der Boden der Sacklochbohrung und/oder die benachbarte Stirnfläche des Ventilkegels mit - vorzugsweise V-förmigen - Schrägflächen versehen sein, die an dem Außenumfang der Kugel tangential anliegen.

Bei einer weiteren vorteilhaften Ausgestaltung besitzt der Ventilkegel einen zylindrischen Abschnitt, der sich an das kegelförmige Ende anschließt, mit dem der Ventilkegel auf dem Ventilsitz aufsitzen kann. Der Durchmesser des zylindrischen Abschnitts ist durch den gewünschten maximalen Durchmesser des kegelförmigen Endes bestimmt und erstreckt sich durch die gehäusefeste Führung hindurch bis in den Anker hinein, so dass der zylindrische Abschnitt für eine schleifende Bearbeitung günstige Länge hat. Die Sacklochbohrung im Anker ist gestuft, um im weiteren Bereich den besagten Abschnitt des Ventilkegels ohne weiteres mit Radialspiel und um im engeren Bereich eine handelsübliche Kugel, beispielsweise eine Kugellagerkugel, mit Presssitz aufnehmen zu können. Vorteilhafterweise taucht der Ventilkegel mit einem Abschnitt geringeren Durchmessers in den engeren Bereich der Sacklochbohrung ein.

Der Anker weist vorzugsweise eine oder mehrere Drosselbohrungen auf, über die Druckmittel bei der Axialverschiebung des Ankers zwischen einem ventilkegelseitigen Ankerraum und einem rückwärtigen Ankerraum strömen kann.

Bei einem vorteilhaften Ausführungsbeispiel wird der Anker über eine Folie gelagert.

Der Aufbau des Sitzventils ist besonders einfach, wenn der Ventilkegel fliegend, das heißt frei verschiebbar im Anker geführt ist. Bei den eingangs genannten Lösungen war der Ventilkegel stets über eine Feder im Anker in Öffnungs- oder Schließrichtung vorgespannt.

Der vorrichtungstechnische Aufwand lässt sich weiter verringern, wenn am Anker rückseitig ein Zentriervorsprung zur Zentrierung einer Regelfeder vorgesehen ist.

Sonstige vorteilhafte Weiterbildungen der Erfindung sind Gegenstand weiterer Unteransprüche.

Im Folgenden wird ein bevorzugtes Ausführungsbeispiel der Erfindung anhand schematischer Zeichnungen näher erläutert. Es zeigen:
Figur 1 einen Schnitt durch ein erfindungsgemäßes direktgesteuertes Druckbegrenzungsventil und
Figur 2 eine Detaildarstellung des Druckbegrenzungsventils aus Figur 1.

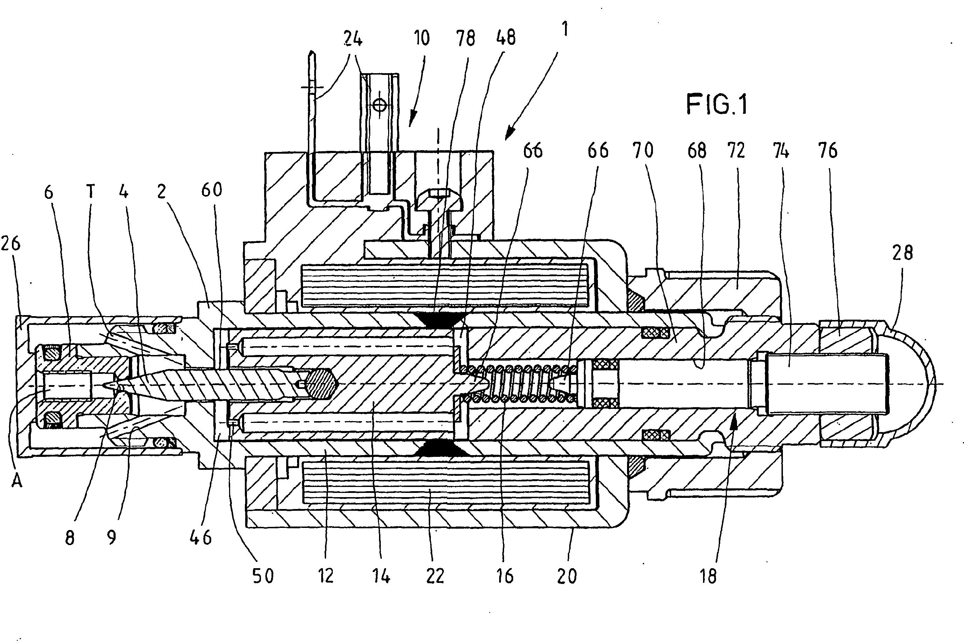

Gemäß dem in Fig. 1 dargestellten Längsschnitt hat das Druckbegrenzungsventil 1 ein Ventilgehäuse 2, in dem ein Ventilkegel 4 axial verschiebbar geführt ist. In das Ventilgehäuse 2 ist ein Sitzkörper 6 eingesetzt, durch den ein axialer Anschluss A und ein Ventilsitz 8 ausgebildet sind. Dieser Sitzkörper 6 kann beispielsweise durch Presspassung in das Gehäuse eingesetzt werden. Im Ventilgehäuse 2 ist ein radialer Ablauf - oder Tankanschluss T durch einen Schrägbohrungsstern 9 ausgebildet. Die Betätigung des Ventilkegels 4 erfolgt mittels eines Proportionalmagneten 10, der axial an das Ventilgehäuse 2 angesetzt ist. Der Proportionalmagnet 10 hat ein einstückig mit dem Ventilgehäuse 2 ausgeführtes Polrohr 12, in dem ein Anker 14 gelagert ist. An diesem ist der Ventilkegel 8 abgestützt. Der Anker 14 ist mittels einer Regelfeder 16 in Schließrichtung des Ventilkegels 8 vorgespannt. Die Vorspannung der Regelfeder 16 lässt sich mittels einer Stelleinrichtung 18 verändern. Der Proportionalmagnet 10 hat des Weiteren ein das Polrohr 12 umgreifendes Spulengehäuse 20, in dem eine Magnetspule 22 aufgenommen ist. Die Stromversorgung des Proportionalmagneten 10 erfolgt über in Fig. 1 oben liegende Anschlüsse 24, die in einem Anschlusskörper zusammengefasst und auf das Spulengehäuse 20 aufgesetzt sind.

Im ausgelieferten Zustand ist das als Einschraubventil ausgeführte Druckbegrenzungsventil 1 mit einer auf das Ventilgehäuse 2 aufgesetzten Anschlussschutzkappe 26 und einer auf eine Kontermutter 76 der Stelleinrichtung aufgesetzten Schutzkappe 28 versehen.

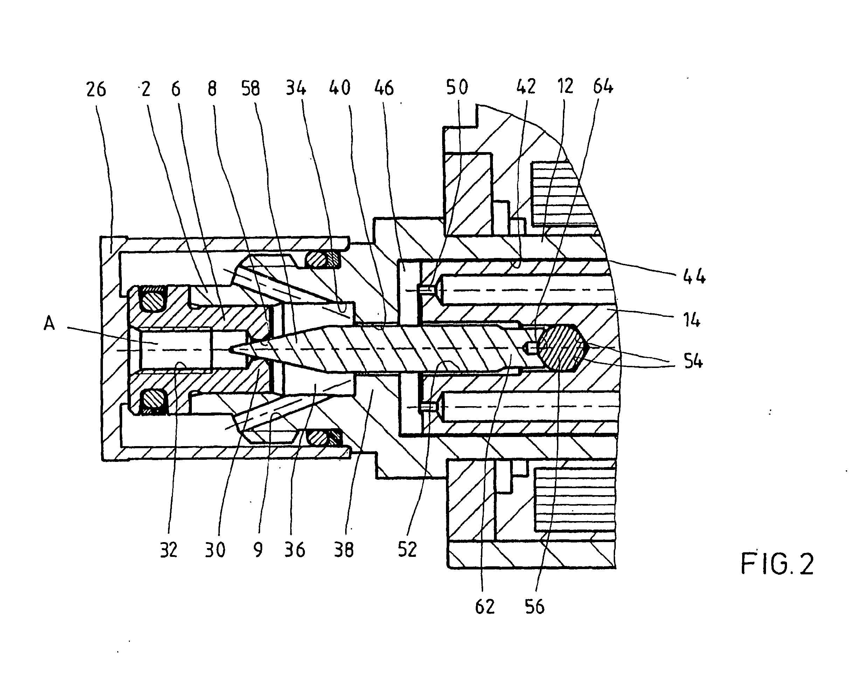

Einzelheiten des Ventilgehäuses werden im Folgenden anhand der vergrößerten Darstellung gemäß Figur 2 erläutert.

Demgemäß hat der Sitzkörper 6 einen etwa tassenförmigen Aufbau, wobei in einem Boden 30 der Ventilsitz 8 ausgebildet ist. Der Anschluss A wird durch eine Axialbohrung 32 des Sitzkörpers 6 ausgebildet, die im Ventilsitz 8 mündet.

Die außenliegende Stirnfläche des Bodens 30 begrenzt mit einer Aufnahmebohrung 34 des Ventilgehäuses 2 einen Tankraum 36, in dem der sich zur Außenumfangsfläche des Ventilkörpers 2 erstreckende Schrägbohrungsstern 9 (Anschluss T) mündet.

Die vom Sitzkörper 6 entfernte Stirnfläche der Aufnahmebohrung 34 wird von einem Gehäusesteg 38 gebildet, der von einer sich koaxial zur Aufnahmebohrung 34 erstreckenden Führungsbohrung 40 durchsetzt ist.

Im Bereich des Gehäusestegs 38 ist an das Ventilgehäuse 2 das Polrohr 12 angesetzt. Dieses kann - wie beim beschriebenen Ausführungsbeispiel - einstückig mit dem Ventilgehäuse 2 oder als eigenes angesetztes Bauteil ausgeführt sein.

Der Anker 14 ist mit seinem Außenumfang in einer Ankerbohrung 42 des Polrohrs 12 geführt. Zur Verminderung der Reibung zwischen Anker 14 und Polrohr 12 ist die Innenumfangswandung der Ankerbohrung 42 mit einer Folie 44, beispielsweise aus Teflonmaterial ausgekleidet. Diese Folie 44 bildet ein Gleitlager für den Anker 14, so dass dieser innerhalb des Polrohrs 12 leicht verschiebbar ist. Um ein Klemmen des Ankers 14 zu verhindern, ist dieser mit einem gewissen Spiel geführt, das beispielsweise 1/10 mm betragen kann.

Der Anker 14 teilt den Aufnahmeraum des Polrohrs 12 (siehe auch Figur 1) in einen ventilkegelseitigen Ankerraum 46 und einen rückseitigen Ankerraum 48. Diese beiden Ankerräume 46, 48 sind mittels Drosselbohrungen 50 verbunden, die sich beim dargestellten Ausführungsbeispiel achsparallel zur Ventilachse durch den Anker 14 hindurch erstrecken.

Der Anker hat ventilsitzseitig eine Sacklochbohrung 52, die sich von der in Figur 2 linken Stirnfläche des Ankers 14 bis etwa in den axial mittleren Bereich hinein erstreckt. Der Boden der Sacklochbohrung 52 ist mit V-förmig zueinander angeordneten Schrägflächen 54 versehen, an denen eine Kugel 56 abgestützt ist. An dieser Kugel 56 ist ihrerseits der Ventilkegel 4 abgestützt. Bei dem in Figur 2 dargestellten Ausführungsbeispiel hat der Ventilkegel 4 einen in der dargestellen Schließstellung abschnittsweise in den Sitzkörper 6 eintauchenden Kegel 58, der mit einem Außenumfangsabschnitt auf dem Ventilsitz 8 aufsitzt. An den Kegel 58 schließt sich ein zylinderförmiger Führungsabschnitt 60 an, der die Führungsbohrung 40 durchsetzt. Ein in den Anker 14 eingetauchter Endabschnitt 62 ist radial zurückgestuft, wobei der Außendurchmesser dieses Endabschnitts 62 etwa dem Durchmesser der Kugel 56 entspricht. Zur Verminderung der Produktionskosten werden als Kugel 56 Kugeln eines herkömmlichen Kugellagers verwendet. Diese zeichnen sich durch eine hohe Festigkeit und gute Verschleißwiderstandsfähigkeit aus.

Die Anlagefläche des Endabschnitts 62 an die Kugel 56 ist ebenfalls mit schrägen Anlageflächen 64 versehen. Durch die Schrägflächen 54 und die schrägen Anlageflächen 64 erfolgt eine Zentrierung der Kugel 56 mit Bezug zur Sacklochbohrung 52 und entsprechend eine Zentrierung des Endabschnittes 62 des Ventilkegels 4 mit Bezug zur Kugel 56.

Zwischen dem Endabschnitt 62 und der Innenumfangsbohrung der Sacklochbohrung 52 ist ein gewisses Spiel vorgesehen, das eine leichte Schrägstellung des Endabschnitts 62 und damit des Ventilkegels 4 oder des Ankers 14 ermöglicht. Durch dieses Kippen des Ventilkegels 4 oder des Ankers 14 kann ein Achsversatz zwischen dem Anker 14 und dem Ventilsitz 8 ausgeglichen werden, dabei wirkt die Kugel 56 praktisch als Gelenklager, um das herum der Ventilkegel 4 relativ zum Anker kippt.

Auch zwischen dem Führungsabschnitt 60 und der Innenumfangswandung der Führungsbohrung 40 ist ein Spiel vorgesehen, dieses Spiel ist jedoch geringer als das vorgeschriebene Spiel zwischen dem Endabschnitt 62 und dem Anker 14. Das Spiel im Bereich des Führungsabschnittes 60 ist so gewählt, dass im Polrohr 12 befindliches Druckmittel im Ruhezustand nicht durch den Ringspalt zwischen dem Führungsabschnitt 60 und der Führungsbohrung 40 hindurch austritt und das Polrohr sozusagen leerläuft.

Gemäss Figur 1 ist an der Rückseite des Ankers 14 ein Zentriervorsprung 66 ausgebildet, auf den eine Anlagescheibe aufgesetzt ist und der zur Zentrierung der an der Anlagescheibe anliegenden Regelfeder 16 dient. Diese taucht in die Innenbohrung 68 eines in das Polrohr 12 eingesetzten Verschlussstückes 70 ein. Dieses ist formschlüssig mit dem Polrohr 12 verbunden, wobei beim dargestellten Ausführungsbeispiel die Verbindung durch Bördeln hergestellt ist.

Auf den Aussenumfang des Verschlussstücks 70 ist eine Sicherungsschraube 72 aufgeschraubt über die das Spulengehäuse 20 gegen eine Schulter des Ventilgehäuses 2 axial gedrückt wird.

In die mit einem Gewinde versehene Innenbohrung 68 ist ein Spannbolzen 74 eingeschraubt, über den die Vorspannung der Regelfeder 16 einstellbar ist. Der federseitige Endabschnitt des Spannbolzens 74 ist ebenfalls mit einem Zentrierzapfen 66 für die Regelfeder versehen. Auf einen aus dem Verschlussstück 70 hervorstehenden Endabschnitt des Spannbolzens 74 ist eine Kontermutter 76 aufgeschraubt, die zur Lagefixierung des Spannbolzens 74 in Anlage an die benachbarte Stirnfläche des Verschlussstücks 70 gebracht wird. Die Schutzkappe 28 ist auf die Kontermutter 76 aufgesetzt. Zur Abdichtung des Polrohrs sind am Aussenumfang des Verschlussstückes 70 sowie am Aussenumfang des Spannbolzen 74 Dichtungselemente vorgesehen. Das Polrohr 12 wird des Weiteren durch einen Ring 78 aus nicht magnetischem Material unterteilt.

Die vorbeschriebene Konstruktion zeichnet sich durch einen sehr einfachen konstruktiven Aufbau mit geringen Toträumen auf, so dass beim Befüllen des Polrohrs 12 die Entstehung von Lufteinschlüssen (Luftpolstern) vermieden wird.

Bei der Montage des Druckbegrenzungsventils 1 wird der Sitzkörper 6 in das Ventilgehäuse 2 eingepreßt. Vor diesem Einspressvorgang befindet sich der Ventilkegel 4 bereits in seiner dargestellten Position. Aufgrund des vergleichsweise geringen Radialspiels zwischen dem Führungsabschnitt 60 des Ventilkegels 4 und der Bohrung 40 fädelt die Kegelspitze sicher in den Sitzkörper 6 ein. Der Ausgleich von Toleranzen zwischen der Lage des Ankers und der Lage des Sitzkörpers erfolgt aufgrund des Radialspiels zwischen dem Ventilkegel 4 und dem Anker 14 durch ein leichtes Verkippen des Ventilkegels.

In seiner Grundposition ist das Polrohr 12 vollständig mit Druckmittel gefüllt. Wird nun der Proportionalmagnet 10 bestromt, so wird der Anker durch die entstehenden Magnetkräfte gegen die Kraft der Regelfeder 16 nach rechts verschoben und der Ventilkegel 4 durch den am Anschluss A wirkenden Druck vom Ventilsitz 8 abgehoben. Der Anker 14 und der Ventilkegel 4 stellen sich in Abhängigkeit von der Kraft der Regelfeder 16, der vom Proportionalmagneten 10 aufgebrachten Magnetkraft und von den wirkenden Druckkräften in eine Regelposition ein, wobei Druckmittel vom Anschluss A über den in Abhängigkeit vom Ankerweg 14 aufgesteuerten Drosselspalt in den Druckraum 36 und von dort über den Schrägbohrungsstern 9 zum Tankanschluss T hin abströmen kann. Bei der Axialverschiebung des Ankers 14 nach rechts (gegen die Kraft der Regelfeder 16) wird das sich im rückwärtigen Ankerraum 48 befindliche Druckmittel über die Drosselbohrungen 50 in den Ankerraum 46 verdrängt. Da das Leervolumen dieses Ankerraums 46 geringer als dasjenige des rückwärtigen Ankerraums 48 ist, muss Druckmittel durch den Ringspalt zwischen dem Führungsabschnitt 60 und der Führungsbohrung 40 vom Ankerraum 46 in den Druckraum 36 verdrängt werden. Diese Drosselung in dem Ringspalt bewirkt bei Druckänderungen in den Ankerräumen 46, 48 eine Dämpfung der entsprechenden Ventilkegelbewegung.

Beim Stromlosschalten des Magnetventils wird der Anker 14 durch die Kraft der Regelfeder 16 wieder nach links verschoben, wobei Druckmittel aus dem Ankerraum 46 über die Drosselbohrungen 50 in den rückwärtigen Ankerraum 48 verdrängt wird - der Ventilkegel wird dann entsprechend wieder nach links verschoben, bis er auf dem Ventilsitz 8 aufsitzt, wobei Druckmittel durch den vorbeschriebenen Ringspalt nachgesaugt wird.

Bei dem dargestellten Ausführungsbeispiel ist das Druckbegrenzungsventil 1 "stromlos geschlossen" ausgeführt. Selbstverständlich könnte das Druckbegrenzungsventil auch "stromlos geöffnet" ausgeführt sein, d. h., der Ventilkegel 4 wäre in der Grundposition in Öffnungsrichtung vorgespannt.

Offenbart ist ein proportional verstellbares Druckbegrenzungsventil bei dem ein Ventilkegel mittels eines Ankers eines Proportionalmagneten betätigbar ist. Der Ventilkegel ist kardanisch im Anker abgestützt. Eine zusätzliche Führung des Ventilkegels erfolgt über eine gehäuseseitige Führung, wobei das Spiel zwischen Ventilkegel und gehäuseseitiger Führung geringer als das Spiel zwischen Ventilkegel und Anker ausgeführt ist.

### Bezugszeichenliste

- 1: Druckbegenzungsventil
- 2: Ventilgehäuse
- 4: Ventilkegel
- 6: Sitzkörper
- 8: Ventilsitz
- 9: Schrägbohrungsstern
- 10: Proportionalmagnet
- 12: Polrohr
- 14: Anker
- 16: Regelfeder
- 18: Stelleinrichtung
- 20: Spulengehäuse
- 22: Magnetspule
- 24: Anschlüsse
- 26: Anschlussschutzkappe
- 28: Schutzkappe
- 30: Boden
- 32: Axialbohrung
- 34: Aufnahmebohrung
- 36: Tankraum
- 38: Gehäusesteg
- 40: Führungsbohrung
- 42: Ankerbohrung
- 44: Folie
- 46: Ankerraum
- 48: rückseitiger Ankerraum
- 50: Drosselbohrung
- 52: Sacklochbohrung
- 54: Schrägflächen
- 56: Kugel
- 58: Kegel
- 60: Führungsabschnitt
- 62: Endabschnitt
- 64: Anlagefläche
- 66: Zentrierzapfen
- 68: Innenbohrung
- 70: Verschlusstück
- 72: Sicherungsschraube
- 74: Spannbolzen
- 76: Kontermutter

## Patentansprüche

1. Direkt gesteuertes und propotional verstellbares Druckbegrenzungsventil mit einem in einem Ventilgehäuse (2) ausgebildeten Ventilsitz (8) und mit einem Ventilkegel (4), die in einer Regelstellung des Ventilkegels (4) einen Drosselspalt begrenzen, über den ein Eingangsanschluss (A) mit einem Ausgangsanschluss (T) verbunden ist, wobei der Ventilkegel (4) in einem bauchgelagerten Anker (14) eines Proportionalmagneten (10) mit Radialspiel abgestützt ist, **gekennzeichnet durch** eine zentrierte kardanische axiale Abstützung des Ventilkegels (8) am Anker (14) und **durch** eine axial zwischen dem Ventilsitz (8) und dem Anker (14) befindliche gehäusefeste Führung (40) für den Ventilkegel (4), die mit geringerem Spiel als das ankerseitige Radialspiel ausgebildet ist.

2. Druckbegrenzungsventil nach Patentanspruch 1, wobei die axiale Abstützung im Anker (14) über eine vorzugsweise eingpreßte Kugel (56) erfolgt.

3. Druckbegrenzungsventil nach Patentanspruch 1 oder 2, wobei die axiale Abstützung in einem in Axialrichtung gesehen mittleren Bereich des Ankers (14) erfolgt.

4. Druckbegrenzungsventil nach Patentanspruch 3, wobei der Anker (14) eine sich in den Mittelbereich hinein erstreckende Sacklochbohrung (52) hat, an deren Boden (54) der Ventilkegel (4) mittelbar abgestützt ist.

5. Druckbegrenzungsventil nach Patentanspruch 4, wobei der Boden (54) mit Schrägflächen (54) versehen ist.

6. Druckbegrenzungsventil nach einem vorhergehenden Patentansprüche, wobei eine Sacklochbohrung (52) im Anker (14), in die der Ventilkegel (4) eintaucht, gestuft ist und wobei in den engeren Bereich der Sacklochbohrung (52) die Kugel (56) eingepreßt ist, während der weitere Bereich der Sacklochbohrung (52) einen Abschnitt (60) des Ventilkegels (4) aufnimmt, der sich mit gleichbleibendem Durchmesser vom Anker (14) durch die gehäusefeste Führung (40) hindurch erstreckt.

7. Druckbegrenzungsventil nach einem der Patentansprüche 2 bis 6, wobei der ventilkegel (4) rückseitig eine zentrische Stirnausnehmung mit Schrägflächen (64) hat, die in Anlage an die Kugel (56) bringbar sind.

8. Druckbegrenzungsventil nach einem der vorhergehenden Patentansprüche, wobei der Anker (14) von zumindest einer Drosselbohrung (50) durchsetzt ist, über die ein ventilkegelseitiger Ankerraum (46) mit einem rückseitigen Ankerraum (48) verbunden ist.

9. Druckbegrenzungsventil nach einem der vorhergehenden Patentansprüche, wobei der Anker (14) entlang seines Außenumfangs über eine Folie (14) bauchgelagert ist.

10. Druckbegrenzungsventil nach einem der vorhergehenden Patentansprüche, wobei der Ventilkegel (4) fliegend im Anker (14) aufgenommen ist.

11. Druckbegrenzungsventil nach einem der vorhergehenden Patentansprüche, wobei der Anker (14) rückseitig einen Zentrierzapfen (66) für eine Regelfeder (16) hat.

## Claims

1. Directly controlled and proportionally adjustable pressure limiting valve having a valve seat (8) formed in a valve housing (2) and a valve cone (4) which define, in a regulating position of the valve cone (4), a throttle gap whereby an inlet port (A) is connected with an outlet port (T), the valve cone (4) being supported with radial play in a center-mounted armature (14) of a proportional solenoid (10), **characterized by** centered cardanic axial support of the valve cone (8) on the armature (14) and by a guide means (40) secured to the housing, that is axially located between the valve seat (8) and the armature (14) for the valve cone (4) and that is formed with less play than the armature-side radial play.

2. The pressure limiting valve in accordance with claim 1, wherein the axial support in the armature (14) is effected with the aid of a preferably press-fitted sphere (56).

3. The pressure limiting valve in accordance with claim 1 or 2, wherein the axial support is effected in a center range of the armature (14) when viewed in the axial direction.

4. The pressure limiting valve in accordance with claim 3, wherein the armature (14) has a blind bore (52) which extends into the center range, and on the bottom (54) of which the valve cone (4) is supported indirectly.

5. The pressure limiting valve in accordance with claim 4, wherein the bottom (54) is provided with oblique surfaces (54).

6. The pressure limiting valve in accordance with any one of the preceding claims, wherein a blind bore (52) in the armature (14), into which the valve cone (4) plunges, is stepped, and wherein the sphere (56) is press-fitted in the narrower range of the blind bore (52), while the other range of the blind bore (52) receives a section (60) of the valve cone (4) that extends with a constant diameter from the armature (14) through the guide means (40) secured to the housing.

7. The pressure limiting valve in accordance with any one of claims 2 to 6, wherein the valve cone (4) has on the rear side a central end face recess with oblique surfaces (64) that are adapted to be taken into contact with the sphere (56).

8. The pressure limiting valve in accordance with any one of the preceding claims, wherein the armature (14) is penetrated by at least one throttle bore (50) whereby a valve cone-side armature chamber (46) is connected with a rearward armature chamber (48).

9. The pressure limiting valve in accordance with any one of the preceding claims, wherein the armature (14) is centrally mounted along its outer circumference through the intermediary of a foil (14).

10. The pressure limiting valve in accordance with any one of the preceding claims, wherein the valve cone (4) is floatingly received in the armature (14).

11. The pressure limiting valve in accordance with any one of the preceding claims, wherein the armature (14),has on its rear side a centering pin (66) for a regulating spring (16).

## Revendications

1. Soupape de limitation de pression commandée directement et réglable de façon proportionnelle comportant un siège de soupape (8) formé dans un boîtier de soupape (2), et un cône de soupape (4), qui limitent, lorsque le cône de soupape (4) est dans une position de réglage, une fente d'étranglement, par l'intermédiaire de laquelle un raccord d'entrée (A) est relié à un raccord de sortie (T), le cône de soupape (4) prenant appui avec un jeu radial dans une armature disposée en saillie (14) d'un aimant à action proportionnelle (10), **caractérisée par** un soutien axial centré à la Cardan du cône de soupape (8) sur l'armature (14) et par un système de guidage (40), solidaire du boîtier et disposé axialement entre le siège de soupape (8) et l'armature (14), pour le cône de soupape (4), cet élément de guidage étant réalisé avec un jeu plus faible que le jeu radial côté armature.

2. Soupape de limitation de pression selon la revendication 1, dans laquelle le soutien axial dans l'armature (14) s'effectue par l'intermédiaire d'une bille (56) de préférence insérée à force.

3. Soupape de limitation de pression selon la revendication 1 ou 2, dans laquelle le soutien axial s'effectue dans une zone médiane, vue dans la direction axiale, de l'armature (14).

4. Soupape de limitation de pression selon la revendication 3, dans laquelle l'armature (14) possède un perçage borgne (52), qui s'étend dans la partie médiane et sur le fond (54) duquel prend appui directement le cône de soupape (4).

5. Soupape de limitation de pression selon la revendication 4, dans laquelle le fond (54) est pourvu de surfaces obliques (54).

6. Soupape de limitation de pression selon l'une des revendications précédentes, dans laquelle un perçage borgne (52) est étagé à l'intérieur de l'armature (14), dans laquelle pénètre le cône de soupape (4), et dans laquelle la bille (56) est insérée à force dans la partie rétrécie du perçage borgne (52), tandis que l'autre partie du perçage borgne (52) reçoit une section (60) du cône de soupape (4), qui s'étend avec un diamètre constant à travers l'élément de guidage (40) solidaire du boîtier, à partir de l'armature (14).

7. Soupape de limitation de pression selon l'une des revendications 2 à 6, dans laquelle le cône de soupape (4) possède, sur son côté arrière, un évidement frontal centré comportant des surfaces obliques (64), qui peuvent venir s'appliquer contre la bille (56).

8. Soupape de limitation de pression selon l'une des revendications précédentes, dans laquelle l'armature (14) est traversée par au moins un perçage d'étranglement (50), au moyen duquel un espace (46) de l'armature, situé du côté du cône de soupape, est relié à un espace (48) de l'armature, situé côté arrière.

9. Soupape de limitation de pression selon l'une des revendications précédentes, dans laquelle l'armature (14) est supportée par une feuille (44) de manière à glisser le long de sa périphérie extérieure.

10. Soupape de limitation de pression selon l'une des revendications précédentes, dans laquelle le cône de soupape (4) est logé à l'état flottant dans l'armature (14).

11. Soupape de limitation de pression selon l'une des revendications précédentes, dans laquelle l'armature (14) possède, sur son côté arrière, un téton de centrage (66) pour un ressort de réglage (16).
